# EUROPEAN PATENT SPECIFICATION

(11) **EP 2 587 632 B1**
(45) Date of publication and mention of the grant of the patent: **23.01.2019**
(21) Application number: 10853666.5
(22) Date of filing: 25.06.2010
(51) Int. Cl.: H02K 1/14, H02K 15/02

(54) **LAMINATED CORE FOR DYNAMO-ELECTRIC MACHINE**
LAMINATKERN FÜR EINE DYNAMOELEKTRISCHE MASCHINE
NOYAU FEUILLETÉ POUR MACHINE DYNAMOÉLECTRIQUE

(43) Date of publication of application: 01.05.2013
(73) Proprietor: Mitsubishi Electric Corporation, Tokyo 100-8310 (JP)
(72) Inventor: HASHIMOTO, Akira, Tokyo 100-8310 (JP); NAKAHARA, Yuji, Tokyo 100-8310 (JP); KOMATSU, Takanori, Tokyo 100-8310 (JP); UMEDA, Takashi, Tokyo 100-8310 (JP)
(74) Representative: Hoffmann Eitle
(86) International application number: PCT/JP2010/060827
(87) International publication number: WO 2011/161806

(56) References cited:
- EP-A2- 1 146 624
- JP-A- 9 285 044
- JP-A- 48 024 204
- JP-A- 57 202 868
- JP-A- H09 285 044
- JP-A- 2001 359 246
- JP-A- 2005 261 179
- JP-A- 2006 288 096
- JP-A- 2008 011 643
- JP-A- 2009 254 086
- US-A- 3 842 493

## Description

### TECHNICAL FIELD

The present invention relates to construction of a rotary electric machine laminated core, and particularly relates to improvements in material yield and performance of a laminated core.

### BACKGROUND ART

In conventional laminated core manufacturing methods, a plurality of punched sheets are punched out of a single steel sheet. Each of the punched sheets has: a belt-shaped back yoke; and a plurality of teeth that protrude perpendicularly from a first long side portion of this back yoke. The punched sheets are punched out in sets of two sheets. Specifically, the two punched sheets are punched out so as to be oriented in opposite directions to each other and so as to be offset in pitch such that the teeth of the second punched sheet are positioned between the teeth of the first punched sheet (see Patent Literature 1, for example).

US 3,842,493 discloses a stator core for rotary electric machines comprising a plurality of equally spaced teeth, each of said teeth including a stem portion, a head portion at the free end of said stem portion and notches formed on opposite sides of the stem portion. However, US 3,842,493 does not disclose a magnetic pole engaging member that is made of a magnetic material and that is capable of engaging with the magnetic pole notch portion and is linked pivotably to the back yoke portion.

EP 1 146 624 A2 discloses a stator core of vehicle rotary electric machine and a method of manufacturing the same.

### CITATION LIST

### PATENT LITERATURE

[Patent Literature 1]
Japanese Patent No. 3681487 (Gazette)

### SUMMARY OF THE INVENTION

### PROBLEM TO BE SOLVED BY THE INVENTION

In conventional laminated core manufacturing methods such as that described above, if a width dimension of tip ends of magnetic pole tooth portions is increased (reducing a slot opening width) in order to reduce torque pulsation and improve torque performance, one problem has been that the teeth of the second punched sheet cannot be disposed between the teeth of the first punched sheet, reducing material yield. Conversely, in order to dispose the teeth of the second punched sheet between the teeth of the first punched sheet, the width dimension of tip ends of the magnetic pole tooth portion is limited.

The present invention aims to solve the above problems and an object of the present invention is to provide a rotary electric machine laminated core that can improve material yield even if a width dimension of tip ends of magnetic pole tooth portions is increased.

### MEANS FOR SOLVING THE PROBLEM

In order to achieve the above object, according to one aspect of the present invention, there is provided a rotary electric machine laminated core including a plurality of core segments including: a back yoke portion; and a magnetic pole tooth portion that protrudes outward from the back yoke portion, the plurality of core segments being arranged into an annular shape and stacked in an axial direction of a rotary electric machine, wherein: each of the magnetic pole tooth portions includes: a tooth main portion that is disposed on an intermediate portion; a width-reduced portion that is disposed on an end portion near the back yoke portion, and in which a width dimension is smaller than that of the tooth main portion; and a widened portion that is disposed on a tip end portion, and in which a width dimension is larger than that of the tooth main portion; the width reduced portion is formed by disposing a pair of magnetic pole notch portions on two width direction sides of the magnetic pole tooth portion; a magnetic pole engaging member that is made of a magnetic material and that is capable of engaging with the magnetic pole notch portion is linked pivotably to the back yoke portion; when the driving coil is wound onto the magnetic pole tooth portion, the magnetic pole engaging member is engaged in the magnetic pole notch portion; mutually-adjacent core segments are linked together pivotably; and a distance between the adjacent width-reduced portions is greater than the width dimension of the widened portions in a state in which the core segments are arranged rectilinearly such that the magnetic pole tooth portions are parallel.

### EFFECTS OF THE INVENTION

In a rotary electric machine laminated core according to the present invention, because the width-reduced portion is disposed on an end portion of the magnetic pole tooth portion near the back yoke portion, and the distance between adjacent width-reduced portions is greater than the width dimension of the widened portions in a state in which the core segments are arranged in a straight line, two core members can be punched such that the magnetic pole tooth portions of one core member are disposed between the magnetic pole tooth portions of another during pressing of core members in which a plurality of core segments are formed by so as to line up in a rectilinear shape even if the widened portions are disposed on the magnetic pole tooth portions, enabling the material yield and productivity to be improved.

### BRIEF DESCRIPTION OF THE DRAWINGS

For a better understanding of the invention and to show how the same may be carried into effect, reference will now be made, by way of example only, to the accompanying drawings, in which:
Figure 1 is a plan that shows a rotary electric machine according to Embodiment 1 of the present invention;
Figure 2 is a plan that shows a laminated core from Figure 1;
Figure 3 is a plan that shows a pressed state of core members from Figure 2;
Figure 4 is a partial enlargement of Figure 3;
Figure 5 is a plan that shows the state in which magnetic pole engaging members from Figure 4 are pivoted;
Figure 6 is a plan that shows a state in which the magnetic pole engaging members from Figure 5 are further pivoted and engaged in the magnetic pole notch portions;
Figure 7 is a plan that shows a rotary electric machine according to Embodiment 2 of the present invention;
Figure 8 is a plan that shows a laminated core from Figure 7; and
Figure 9 is a plan that shows a core segment from Figure 7 enlarged.

### DESCRIPTION OF EMBODIMENTS

Preferred embodiments of the present invention will now be explained with reference to the drawings.

### Embodiment 1

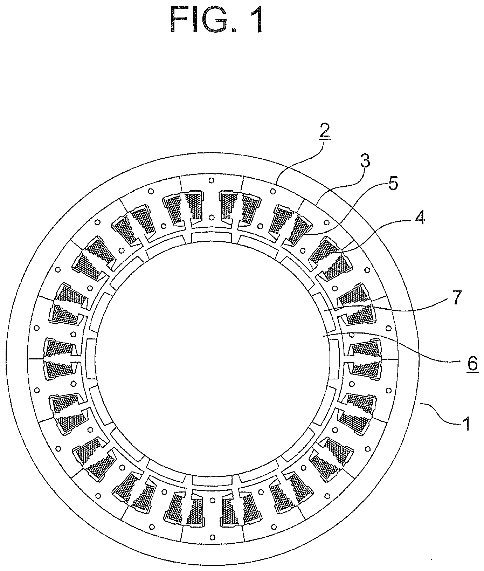

Figure 1 is a plan that shows a rotary electric machine according to Embodiment 1 of the present invention. In the figure, a cylindrical stator 2 is held inside a cylindrical housing 1. The stator 2 has: a laminated core 3; a driving coil 4 that is wound onto the laminated core 3; and insulators 5 that are interposed between the laminated core 3 and the driving coil 4.

A rotor 6 is disposed inside the stator 2. The rotor 6 is held by the housing 1 so as to be rotatable relative to the stator 2. The rotor 6 has: a plurality of permanent magnets 7 that are fixed to an outer circumferential portion thereof, and that face the stator 2.

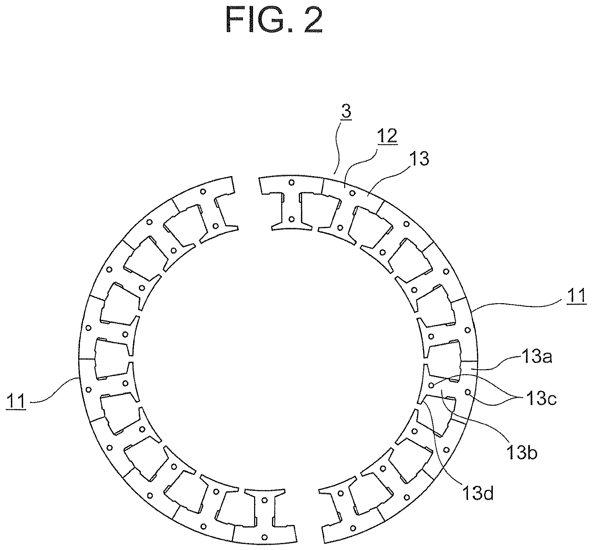

Figure 2 is a plan that shows the laminated core 3 from Figure 1. The laminated core 3 is configured by assembling a plurality of (in this example, two) circular arc-shaped segmented laminated cores 11 into an annular shape. Each of the segmented laminated cores 11 is configured by laminating belt-shaped core members 12 in an axial direction of the rotary electric machine. Each of the core members 12 is constituted by a plurality of (in this example, nine) core segments 13 that are arranged into a circular arc shape.

Each of the core segments 13 has: a back yoke portion 13a that forms an annular yoke portion of the laminated core 3; and a magnetic pole tooth portion 13b that protrudes outward toward a radially inner side of the laminated core 3 from the back yoke portion 13a, and onto which the driving coil 4 is wound.

Punch-crimped portions 13c are disposed centrally on the back yoke portion 13a and in a vicinity of a tip end portion of the magnetic pole tooth portion 13b. The stacked core segments 13 are fixed to each other by the punch-crimped portions 13c.

Two end portions in a width direction at the tip end portion of the magnetic pole tooth portion 13b project in a circumferential direction of the laminated core 3. Thus, a widened portion 13d is formed on the tip end portion (the radially inner end portion) of the magnetic pole tooth portion 13b. A width dimension of the widened portion 13d is greater than a width dimension of a portion that is adjacent to the widened portion 13d on a side near the back yoke portion 13a.

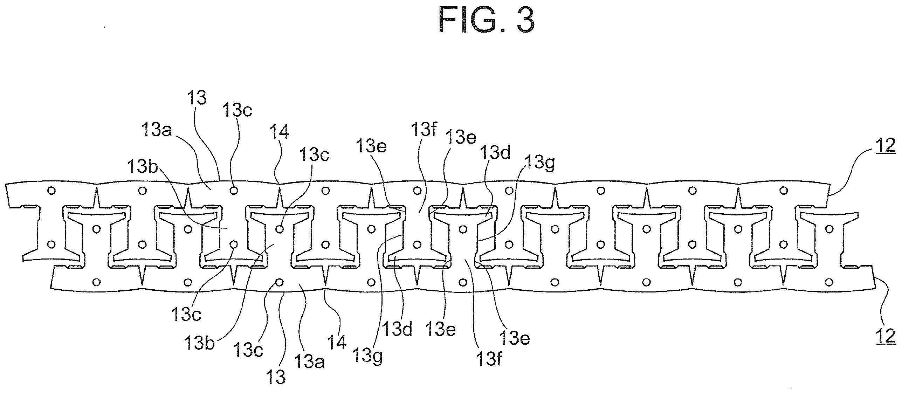

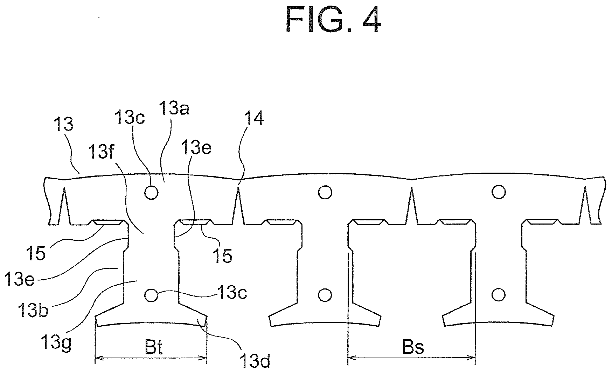

Figure 3 is a plan that shows a pressed state of core members 12 from Figure 2, and Figure 4 is a partial enlargement of Figure 3. The core members 12 are manufactured so as to be expanded rectilinearly such that the magnetic pole tooth portions 13b are parallel by pressing a magnetic sheet. The core members 12 are also pressed such that the magnetic pole tooth portions 13b of one core member 12 are positioned between the magnetic pole tooth portions 13b of another.

V-shaped notch portions are disposed between mutually-adjacent back yoke portions 13a so as to leave thin linking portions 14. The mutually-adjacent back yoke portions 13a are thereby linked so as to be pivotable (bendable) at the thin linking portions 14. The segmented laminated cores 11 are formed by stacking rectilinear core members 12 of this kind and bending them into a circular arc shape.

Pairs of trapezoidal magnetic pole notch portions 13e are disposed on two width direction sides of root portions of the magnetic pole tooth portions 13b (end portions near the back yoke portions 13a). Width-reduced portions 13f are thereby formed on the root portions of the magnetic pole tooth portions 13b. Tooth main portions 13g are formed on intermediate portions of the magnetic pole tooth portions 13b, that is, between the width-reduced portions 13f and the widened portions 13d. A width dimension of the width-reduced portions 13f is less than a width dimension of the tooth main portions 13g.

The widened portions 13d of the core segments 13 of one core member 12 are positioned between the width-reduced portions 13f of the mutually-adjacent magnetic pole tooth portions 13b of another during pressing. Because of this, if Bt is the width dimension of the widened portions 13d and Bs is the distance between the adjacent width-reduced portions 13f, then Bs is greater than Bt when the core segments 13 are arranged rectilinearly. Moreover, in order to suppress pressing die cutter damage, it is preferable to set Bs so as to be greater than or equal to (Bt + 2T), where T is the sheet thickness of the core segments 13 (the magnetic sheet).

Pairs of trapezoidal magnetic pole engaging members 15 are disposed on side of each of the back yoke portions 13a from which the magnetic pole tooth portions 13b protrude. The magnetic pole engaging members 15 are disposed at the root portions of the magnetic pole tooth portions 13b.

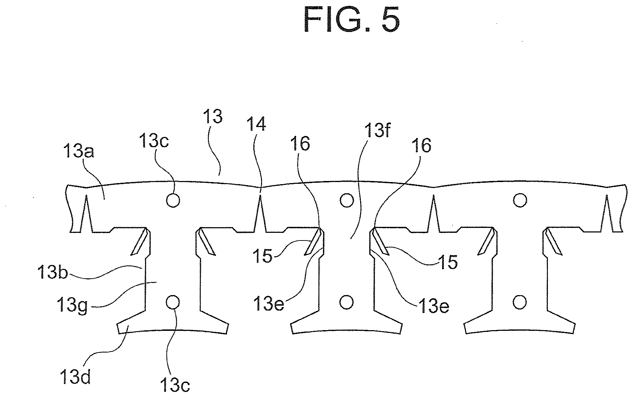

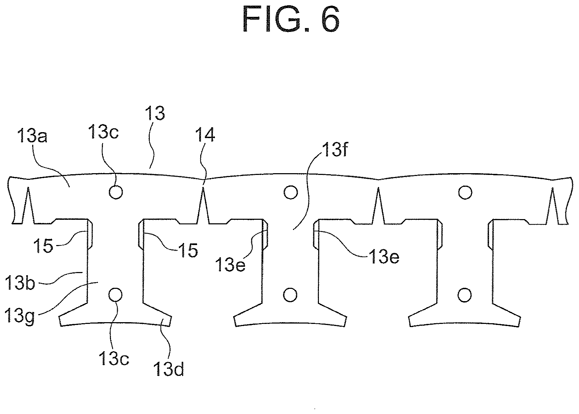

As shown in Figure 5, the magnetic pole engaging members 15 are linked pivotably to the back yoke portions 13a by means of thin linking portions 16 that are disposed on end portions thereof near the magnetic pole tooth portions 13b. As shown in Figure 6, the magnetic pole engaging members 15 engage (interfit) with the magnetic pole notch portions 13e by the magnetic pole engaging members 15 being pivoted further from the state in Figure 5 toward the magnetic pole tooth portions 13b.

When the driving coil 4 is wound onto the magnetic pole tooth portions 13b, the magnetic pole engaging members 15 are engaged in the magnetic pole notch portions 13e, and are held in the magnetic pole notch portions 13e by the insulators 5 that are disposed on the outer circumferences of the magnetic pole tooth portions 13b.

In a laminated core 3 of this kind, because the widened portions 13d are disposed on the tip end portions of the magnetic pole tooth portions 13b, torque pulsation can be reduced to improve torque performance. Because the width-reduced portions 13f are disposed on the root portions of the magnetic pole tooth portions 13b, two core members 12 can be punched in a state in which the magnetic pole tooth portions 13b of one core member 12 are disposed between the magnetic pole tooth portions 13b of another when the core members 12 are pressed even if the widened portions 13d are disposed on the magnetic pole tooth portions 13b, enabling the material yield and productivity to be improved.

Because the magnetic pole notch portions 13e are embedded by the magnetic pole engaging members 15 after assembly, effects due to the magnetic pole notch portions 13e are reduced, enabling torque reduction to be suppressed and enable satisfactory performance to be achieved.

In addition, because the magnetic pole engaging members 15 are held by the insulators 5, the magnetic pole engaging members 15 can be held without increasing the number of parts.

Because the magnetic pole engaging members 15 are linked pivotably to the back yoke portion 13a by the thin linking portions 16 after pressing, the magnetic pole engaging members 15 can be handled together with the core members 12, making them superior in transportability during assembly.

### Embodiment 2

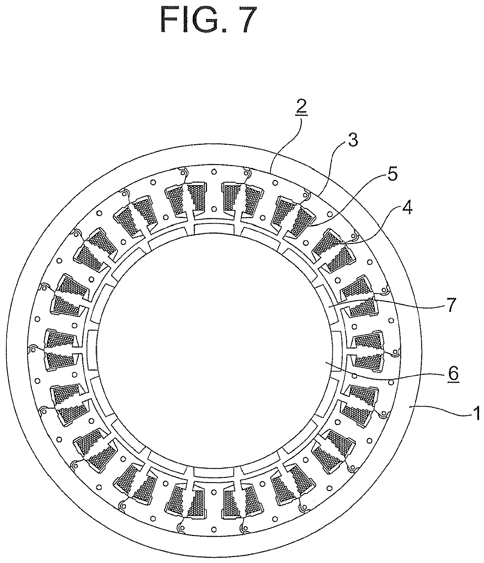

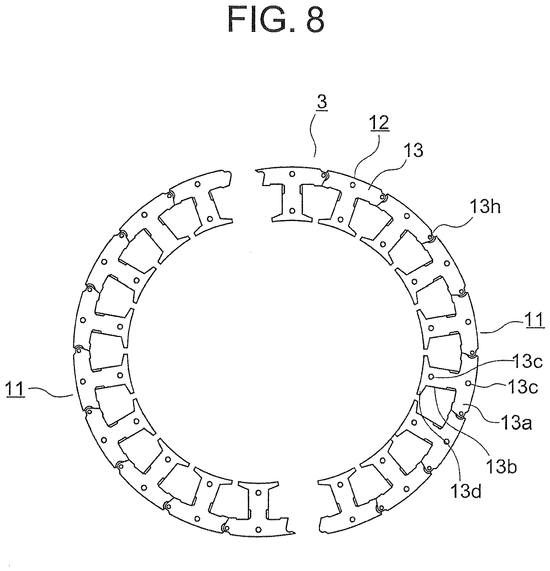

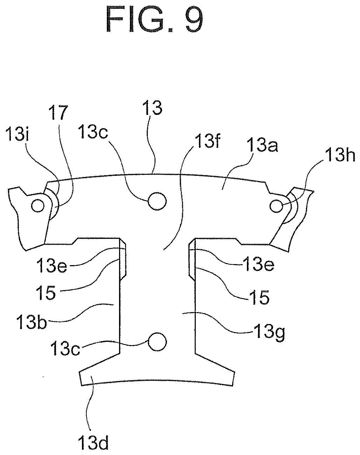

Next, Figure 7 is a plan that shows a rotary electric machine according to Embodiment 2 of the present invention, Figure 8 is a plan that shows a laminated core from Figure 7, and Figure 9 is a plan that shows a core segment from Figure 7 enlarged. In Embodiment 1, the mutually-adjacent core segments 13 were linked by the thin linking portions 14, but in Embodiment 2, mutually-adjacent core segments 13 are linked pivotably around pivoting shaft portions 13h that are disposed on back yoke portions 13a. The rest of the configuration is similar or identical to that of Embodiment 1.

More specifically, the back yoke portions 13a have: a first end portion which is one end portion in a circumferential direction of the laminated core 3; and a second end portion which is another end portion. The pivoting shaft portions 13h are formed on the first end portions of the back yoke portions 13a so as to protrude in the axial direction of the rotary electric machine. The pivoting shaft portions 13h are disposed closer to outer circumferential surfaces of the back yoke portions 13a than to inner circumferential surfaces. The first end portions of the back yoke portions 13a are abutted to the second end portions of the back yoke portions 13a of adjacent core segments 13.

Circular arc-shaped notch portions 13i are disposed on the second end portions of the back yoke portions 13a such that gaps 17 are formed with the adjacent first end portions when the core segments 13 are arranged in an annular shape or a circular arc shape. The first end portions and the second end portions of the back yoke portions 13a are configured such that predetermined gaps that connect the outer circumferential sides to the inner circumferential sides are formed between the two when the core segments 13 are expanded rectilinearly such that the magnetic pole tooth portions 13b are parallel to each other.

In the segmented laminated cores 11 according to Embodiment 2, first core members that are formed by sequentially arranging core segments 13 in which the first end portions of the back yoke portions 13a are oriented in a first direction relative to a direction of rotation of the rotary electric machine and second core members that are formed by sequentially arranging core segments 13 in which the first end portions of the back yoke portions 13a are oriented in a second direction relative to the direction of rotation of the rotary electric machine are stacked alternately and linked to each other in pairs of layers, for example.

Thus, even if the linking construction of the core segments 13 is different than that of Embodiment 1, because the width-reduced portions 13f are disposed on the root portions of the magnetic pole tooth portions 13b, two core members 12 can be punched in a state in which the magnetic pole tooth portions 13b of one core member 12 are disposed between the magnetic pole tooth portions 13b of another when the core members 12 are pressed even if the widened portions 13d are disposed on the magnetic pole tooth portions 13b, enabling the material yield and productivity to be improved.

Because the magnetic pole notch portions 13e are embedded by the magnetic pole engaging members 15 after assembly, effects due to the magnetic pole notch portions 13e are reduced, enabling torque reduction to be suppressed and enable satisfactory performance to be achieved.

Moreover, in Embodiments 1 and 2, the magnetic pole engaging members 15 were linked to the back yoke portions 13a by the thin linking portions 16, but the thin linking portions 16 may also be assembled on the magnetic pole notch portions 13e after being pressed so as to be separated from the core members 12.

The magnetic pole engaging members 15 may also be produced by sintering a magnetic powder, for example, or be produced by hot forming a magnetic powder on which a resin is coated. In other words, the magnetic pole engaging members 15 can be constituted by a magnetic material that is identical or similar to that of the core segments 13.

In addition, in Embodiments 1 and 2, the laminated core 3 is configured by assembling two segmented laminated cores 11, but the laminated core 3 may also be configured integrally without segmentation, or may also be configured by assembling segmented laminated cores 11 that are divided into three or more segments.

Furthermore, the shape of the magnetic pole notch portions 13e and the magnetic pole engaging members 15 can facilitate engagement by being made a trapezoidal shape, but is not necessarily limited to being a trapezoidal shape.

## Claims

1. A rotary electric machine laminated core (11) comprising a plurality of core segments (13) comprising:
a back yoke portion (13a); and
a magnetic pole tooth portion (13b) that protrudes outward from the back yoke portion (13a),
the plurality of core segments being arranged into an annular shape and stacked in an axial direction of a rotary electric machine, wherein:
each of the magnetic pole tooth portions (13b) comprises:
a tooth main portion (13g) that is disposed on an intermediate portion;
a width-reduced portion (13f) that is disposed on an end portion near the back yoke portion (13a), and in which a width dimension is smaller than that of the tooth main portion (13g); and
a widened portion (13d) that is disposed on a tip end portion, and in which a width dimension is larger than that of the tooth main portion (13g);
the width-reduced portion (13f) is formed by disposing a pair of magnetic pole notch portions (13e) on two width direction sides of the magnetic pole tooth portion (13b);
mutually-adjacent core segments (13) are linked together pivotably; and
a distance between the adjacent width-reduced portions (13f) is greater than the width dimension of the widened portions (13d) in a state in which the core segments (13) are arranged rectilinearly such that the magnetic pole tooth portions (13b) are parallel, **characterised by**
a magnetic pole engaging member (15) that is made of a magnetic material and that is capable of engaging with the magnetic pole notch portion (13e) is linked pivotably to the back yoke portion (13a);
when the driving coil (4) is wound onto the magnetic pole tooth portion (13b), the magnetic pole engaging member (15) is engaged in the magnetic pole notch portion (13e).

2. A rotary electric machine laminated core (11) according to Claim 1, wherein the magnetic pole engaging member (15) is linked pivotably to the back yoke portion (13a) by means of a thin linking portion (16) that is disposed on an end portion thereof.

3. A rotary electric machine laminated core (11) according to Claim 1, further comprising an insulator (5) that is disposed on an outer circumference of the magnetic pole tooth portion (13b), and that holds the magnetic pole engaging member (15) inside the magnetic pole notch portions (13e).

4. A rotary electric machine laminated core (11) according to either of Claims 1 or 2, wherein a shape of the magnetic pole notch portions (13e) and the magnetic pole engaging member (15) is trapezoidal.

## Patentansprüche

1. Laminierter Kern (11) einer elektrischen Drehmaschine, aufweisend eine Vielzahl von Kernsegmenten (13), aufweisend:
einen hinteren Jochabschnitt (13a); und
einen Magnetpol-Zahnabschnitt (13b), der von dem hinteren Jochabschnitt (13a) nach außen vorsteht,
wobei die Vielzahl von Kernsegmenten in einer ringförmigen Form angeordnet sind und in einer axialen Richtung einer elektrischen Drehmaschine gestapelt sind, wobei:
jeder der Magnetpol-Zahnabschnitte (13b) aufweist:
einen Zahnhauptabschnitt (13g), der an einem Zwischenabschnitt angeordnet ist;
einen breitenreduzierten Abschnitt (13f), der an einem Endabschnitt nahe dem hinteren Jochabschnitt (13a) angeordnet ist und in dem eine Breitenabmessung kleiner ist als die des Zahnhauptabschnitts (13g); und
einen verbreiterten Abschnitt (13d), der an einem Spitzenendabschnitt angeordnet ist und in dem eine Breitenabmessung größer ist als die des Zahnhauptabschnitts (13g);
wobei der breitenreduzierte Abschnitt (13f) durch Anordnen eines Paares von Magnetpol-Kerbenabschnitten (13e) auf zwei Breitenrichtungsseiten des Magnetpol-Zahnabschnitts (13b) ausgebildet ist;
einander benachbarte Kernsegmente (13) schwenkbar miteinander verbunden sind; und
ein Abstand zwischen den benachbarten breitenreduzierten Abschnitten (13f) größer ist als die Breitenabmessung der verbreiterten Abschnitte (13d) in einem Zustand, in dem die Kernsegmente (13) geradlinig angeordnet sind, so dass die Magnetpol-Zahnabschnitte (13b) parallel sind, **gekennzeichnet durch**
ein Magnetpol-Eingriffselement (15), das aus einem magnetischen Material ist, in der Lage ist, mit dem Magnetpol-Kerbenabschnitt (13e) in Eingriff zu kommen, und schwenkbar mit dem hinteren Jochabschnitt (13a) verbunden ist;
wobei, wenn die Antriebsspule (4) auf den Magnetpol-Zahnabschnitt (13b) aufgewickelt ist, das Magnetpol-Eingriffselement (15) in dem Magnetpol-Kerbenabschnitt (13e) in Eingriff ist.

2. Laminierter Kern (11) einer elektrischen Drehmaschine nach Anspruch 1, wobei das Magnetpol-Eingriffselement (15) schwenkbar mit dem hinteren Jochabschnitt (13a) mittels eines dünnen Verbindungsabschnitts (16) verbunden ist, der an einem Endabschnitt davon angeordnet ist.

3. Laminierter Kern (11) einer elektrischen Drehmaschine nach Anspruch 1, ferner aufweisend einen Isolator (5), der an einem äußeren Umfang des Magnetpol-Zahnabschnitts (13b) angeordnet ist und der das Magnetpol-Eingriffselement (15) innerhalb der Magnetpol-Kerbenabschnitte (13e) hält.

4. Laminierter Kern (11) einer elektrischen Drehmaschine nach einem der Ansprüche 1 oder 2, wobei eine Form der Magnetpol-Kerbenabschnitte (13e) und des Magnetpol-Eingriffselements (15) trapezförmig ist.

## Revendications

1. Noyau laminé de machine électrique rotative (11) comprenant une pluralité de segments de noyau (13) comprenant :
une partie de culasse arrière (13a) ; et
une partie de dent de pôle magnétique (13b) qui fait saillie vers l'extérieur depuis la partie de culasse arrière (13a),
la pluralité de segments de noyau étant agencée en une forme annulaire et empilée dans une direction axiale d'une machine électrique rotative, dans lequel :
chacune des parties de dent de pôle magnétique (13b) comprend :
une partie principale de dent (13g) qui est disposée sur une partie intermédiaire ;
une partie réduite en largeur (13f) qui est disposée sur une partie d'extrémité près de la partie de culasse arrière (13a), et dans laquelle une dimension en largeur est inférieure à celle de la partie principale de dent (13g) ; et
une partie élargie (13d) qui est disposée sur une partie d'extrémité distale et dans laquelle une dimension en largeur est supérieure à celle de la partie principale de dent (13g) ;
la partie réduite en largeur (13f) est formée en disposant une paire de parties d'encoche de pôle magnétique (13e) sur deux côtés dans le sens de la largeur de la partie de dent de pôle magnétique (13b) ;
des segments de noyau mutuellement adjacents (13) sont reliés entre eux de manière pivotante ; et
une distance entre les parties adjacentes réduites en largeur (13f) est supérieure à la dimension en largeur des parties élargies (13d) dans un état dans lequel les segments de noyau (13) sont disposés de manière rectiligne de sorte que les parties de dent de pôle magnétique (13b) soient parallèles, **caractérisé par**
un élément de mise en prise de pôle magnétique (15) constitué d'un matériau magnétique et capable de venir en prise avec la partie d'encoche de pôle magnétique (13e) qui est relié de manière pivotante à la partie de culasse arrière (13a) ;
lorsque la bobine d'entraînement (4) est enroulée sur la partie de dent de pôle magnétique (13b), l'élément de mise en prise de pôle magnétique (15) est mis en prise dans la partie d'encoche de pôle magnétique (13e).

2. Noyau laminé de machine électrique rotative (11) selon la revendication 1, dans lequel l'élément de mise en prise de pôle magnétique (15) est relié de manière pivotante à la partie de culasse arrière (13a) au moyen d'une partie de liaison mince (16) qui est disposée sur une partie d'extrémité de celui-ci.

3. Noyau laminé de machine électrique rotative (11) selon la revendication 1, comprenant en outre un isolant (5) qui est disposé sur une circonférence externe de la partie de dent de pôle magnétique (13b) et qui maintient l'élément de mise en prise de pôle magnétique (15) à l'intérieur des parties d'encoche de pôle magnétique (13e).

4. Noyau laminé de machine électrique rotative (11) selon l'une des revendications 1 ou 2, dans lequel une forme des parties d'encoche de pôle magnétique (13e) et de l'élément de mise en prise de pôle magnétique (15) est trapézoïdale.
